# EUROPÄISCHE PATENTANMELDUNG

(11) **EP 3 388 320 A1**
(43) Veröffentlichungstag der Anmeldung: **17.10.2018**
(21) Anmeldenummer: 18164982.3
(22) Anmeldetag: 29.03.2018
(51) Int. Cl.: B62K 3/00, B62M 6/45

(54) **VERFAHREN UND STEUERGERÄT ZUR STEUERUNG EINES MOTORANTRIEBS**

(30) Priorität: 30.03.2017 DE 102017205433
(71) Anmelder: Brake Force One GmbH, 72074 Tübingen (DE)
(72) Erfinder: Zimmermann, Marc, 71229 Leonberg (DE); Buddrick, Alexander, 75059 Zaisenhausen (DE)
(74) Vertreter: Kohler Schmid Möbus Patentanwälte

(57) **Zusammenfassung**

Verfahren (100) zur Steuerung eines Motorantriebs eines mittels einer manuellen Abstoßbewegung antreibbaren Fahrzeugs zur Fortbewegung mindestens einer Person mit folgenden Schritten:
- Empfangen (120) eines ersten Sensorsignals und Speichern (120) des ersten Sensorsignals als Referenzwert, wobei das erste Sensorsignal den aktuellen Wert einer Geschwindigkeitskenngröße des Fahrzeugs repräsentiert;
- Empfangen (130) mindestens eines zweiten Sensorsignals, wobei das zweite Sensorsignal eine von einer Person mittels einer Körperbewegung auf das Fahrzeug (22) ausgeübte Kraft (F1; F2) repräsentiert, wobei die Körperbewegung nicht als manuelle Abstoßbewegung ausgebildet ist; und
- Übertragen (140) eines Steuersignals an den Motorantrieb in Abhängigkeit von dem zweiten Sensorsignal, sodass ein mittels des Motorantriebs erzielter Wert der Geschwindigkeitskenngröße kleiner oder gleich dem zuletzt gespeicherten Referenzwert der Geschwindigkeitskenngröße ist,wobei das Steuersignal ausgebildet ist, den Motorantrieb in einen Betriebszustand zu versetzen, in welchem der Motorantrieb eine Antriebskraft auf das Fahrzeug aufbringt.

## Beschreibung

### Stand der Technik

Die Erfindung betrifft ein Verfahren zur Steuerung eines Motorantriebs, ein Steuergerät zur Ausführung des Verfahrens und ein Fahrzeug mit dem Steuergerät. Gegenstand der vorliegenden Erfindung ist auch ein Computerprogramm.

Bekannt sind Steuervorrichtungen beispielsweise für elektrisch unterstützte Tretroller. Hierbei wird der Tretroller durch eine mittels eines Fußes des Fahrers ausgeführte Abstoßbewegung angetrieben. Anschließend wird ein am Tretroller angeordneter Motorantrieb mittels der Steuervorrichtung automatisiert derart angesteuert, dass der Tretroller die Geschwindigkeit nach der Abstoßbewegung für eine gewisse Zeitdauer konstant hält beziehungsweise eine Abnahme der Geschwindigkeit beim Ausrollen des Tretrollers verlangsamt. Durch einen erneuten Abstoßvorgang kann ein Antriebsmoment beziehungsweise eine Antriebskraft des Motorantriebs erneut angefordert werden. Bei alternativen Steuervorrichtungen lässt sich das Antriebsmoment beziehungsweise die Antriebskraft des Motorantriebs über ein Steuerelement vom Fahrer direkt ansteuern und die Geschwindigkeit des Fahrzeugs mittels des Steuerelements verändern.

Aus der DE 10 2011 084 754 A1 ist ein Verfahren zum Betreiben eines elektromotorisch unterstützten Tretrollers bekannt, wobei das Verfahren folgenden Schritt vorsieht: Verzögern der Fortbewegung des Tretrollers mittels eines Motorbremsmoments, wobei das Verzögern mittels eines Betätigungsvorgangs eines Bremstasters durch den Fahrer ausgelöst wird.

### Offenbarung der Erfindung

Gegenstand der vorliegenden Erfindung ist ein Verfahren zur Steuerung eines Motorantriebs eines mittels einer manuellen Abstoßbewegung antreibbaren Fahrzeugs zur Fortbewegung mindestens einer Person mit folgenden Schritten:
- Empfangen eines ersten Sensorsignals und Speichern des ersten Sensorsignals als Referenzwert, wobei das erste Sensorsignal den aktuellen Wert einer Geschwindigkeitskenngröße des Fahrzeugs repräsentiert;
- Empfangen mindestens eines zweiten Sensorsignals, wobei das zweite Sensorsignal eine von einer Person mittels einer Körperbewegung auf das Fahrzeug ausgeübte Kraft repräsentiert, wobei die Körperbewegung nicht als manuelle Abstoßbewegung ausgebildet ist; und
- Übertragen eines Steuersignals an den Motorantrieb in Abhängigkeit von dem zweiten Sensorsignal, sodass ein mittels des Motorantriebs erzielter Wert der Geschwindigkeitskenngröße kleiner oder gleich dem zuletzt gespeicherten Referenzwert der Geschwindigkeitskenngröße ist, wobei das Steuersignal ausgebildet ist, den Motorantrieb in einen Betriebszustand zu versetzen, in welchem der Motorantrieb eine Antriebskraft auf das Fahrzeug aufbringt.

Gegenstand der vorliegenden Erfindung ist ferner ein Steuergerät zur Ausführung des Verfahrens, ein Fahrzeug mit dem Steuergerät, einem Motorantrieb und mindestens einem Sensorelement sowie ein Computerprogramm.

Unter einem Verfahren zur Steuerung eines Motorantriebs kann im Rahmen der vorliegenden Erfindung ein Steuerverfahren für einen Motorantrieb verstanden werden. Die Schritte des Verfahrens können beispielsweise mittels eines dafür eingerichteten Computerprogramms auf einem Steuergerät ausgeführt werden. Unter einem Motorantrieb kann im Rahmen der vorliegenden Erfindung ein motorischer Antrieb verstanden werden, der ausgebildet ist, eine Antriebskraft auf ein Fahrzeug zu übertragen beziehungsweise mittels eines Antriebsmoments ein Fahrzeug anzutreiben. Beispielsweise ist der Motorantrieb ausgebildet, das Antriebsmoment auf mindestens ein Rad eines Fahrzeugs zu übertragen. Der Motorantrieb kann zum Beispiel ein Elektromotor oder ein Verbrennungsmotor sein. Der Motorantrieb ist ausgebildet, eine manuelle Antriebsbewegung, insbesondere eine manuelle Abstoßbewegung, durch ein Antriebsmoment motorisch zu unterstützen. Hierbei kann das Antriebsmoment der Antriebsbewegung zeitlich nachgeordnet sein. Unter einer Antriebskraft kann im Rahmen der vorliegenden Erfindung eine Kraft verstanden werden, die ausgebildet ist, das Fahrzeug anzutreiben. Zum Beispiel kann mittels der Antriebskraft ein Ausrollen des Fahrzeugs beispielsweise aufgrund von Reibungskräften oder Hangabtriebskräften an Steigungen verlangsamt beziehungsweise verlängert werden. Die vom Motorantrieb an das Fahrzeug zu einer Verlängerung der Ausrollphase übertragene Antriebskraft kann in Abhängigkeit von dem ersten Sensorsignal mittels einer Recheneinheit des Steuergeräts in Echtzeit als ein Schritt des Verfahrens berechnet werden. Zusätzlich können bei dem Verfahren auf einem Speichermedium gespeicherte Geschwindigkeitsprofile beziehungsweise Kraftprofile beziehungsweise Drehmomentprofile zur Berechnung der zu übertragenden Antriebskraft beziehungsweise des zu übertragenden Antriebsmoments verwendet werden. Die Stärke der Antriebskraft und/oder die Zeitdauer der Antriebskraft und/oder der zeitliche Verlauf der Antriebskraft hängen beispielsweise von einer Geschwindigkeit des Fahrzeugs, insbesondere einer Geschwindigkeit während der Abstoßbewegung und/oder während der Körperbewegung ab. Hierbei kann die Stärke der Antriebskraft und/oder die Zeitdauer der Antriebskraft und/oder der zeitliche Verlauf der Antriebskraft von der Geschwindigkeit am Ende der Abstoßbewegung und/oder von der Geschwindigkeit am Ende der Körperbewegung abhängen. Die Stärke der Antriebskraft und/oder die Zeitdauer der Antriebskraft und/oder der zeitliche Verlauf der Antriebskraft können auch von einer bei der Abstoßbewegung und/oder der bei Körperbewegung auf das Fahrzeug aufgebrachten Kraft und/oder von einer mittels der Abstoßbewegung und/oder der Körperbewegung erzielten Beschleunigung des Fahrzeugs abhängen. Denkbar ist ebenfalls, dass die Stärke der Antriebskraft und/oder die Zeitdauer der Antriebskraft und/oder der zeitliche Verlauf der Antriebskraft von einem zeitlichen Verlauf von mindestens zwei, insbesondere von mindestens zwei aufeinanderfolgenden, Abstoßbewegungen und/oder Körperbewegungen abhängt. Ein zur Ausführung des Steuerverfahrens eingerichtetes Steuergerät kann eine Schnittstelle aufweisen, mittels derer ein mathematischer Zusammenhang zwischen mindestens einer der Größen Stärke der Antriebskraft und/oder Zeitdauer der Antriebskraft und/oder zeitlicher Verlauf der Antriebskraft und einer der Größen Geschwindigkeit und/oder Beschleunigung des Fahrzeugs während der manuellen Abstoßbewegung und/oder während der Körperbewegung und/oder der bei der Körperbewegung und/oder der bei der Abstoßbewegung auf das Fahrzeug aufgebrachten Kraft und/oder von einer mittels der Abstoßbewegung und/oder mittels der Körperbewegung erzielten Beschleunigung des Fahrzeugs einstellbar beziehungsweise programmierbar ist.

Unter einer manuellen Abstoßbewegung kann im Rahmen der vorliegenden Erfindung eine abstoßende oder abdrückende Bewegung einer Person mit ihrem Körper oder mit einem Körperteil an einer Fläche verstanden werden. Bei dem Körperteil kann es sich beispielsweise um einen Fuß oder eine Hand handeln. Bei der Fläche kann es sich um die Fläche handeln, auf der die Fortbewegung des Fahrzeugs erfolgt, beispielsweise ein Untergrund. Hierbei kann das Fahrzeug als Tretroller ausgebildet sein. Dabei wird die manuelle Abstoßbewegung bevorzugt mit dem Fuß, das heißt, mit anderen Worten, als peduelle Abstoßbewegung ausgeführt. Auch ist jedoch denkbar, dass das Abstoßen an einer Fläche wie beispielsweise einem Pedal oder einem Greifreifen erfolgt. Demnach kann es sich bei dem Fahrzeug beispielsweise auch um ein Fahrrad oder einen Rollstuhl handeln. Auch ist denkbar, dass das Abstoßen beispielsweise an einer Wasseroberfläche beziehungsweise im Wasser erfolgt, sodass das Fahrzeug auch ein Tretboot oder ein Ruderboot sein kann.

Unter einer Geschwindigkeitskenngröße kann im Rahmen der vorliegenden Erfindung eine physikalische Größe verstanden werden, die ein Maß beziehungsweise ein Kennwert für die Geschwindigkeit eines Fahrzeugs repräsentiert. Die Geschwindigkeitskenngröße kann zum Beispiel die Geschwindigkeit des Fahrzeugs oder die Drehzahl eines Motors des Fahrzeugs oder die Drehzahl eines Rads des Fahrzeugs ein. Die Geschwindigkeitskenngröße ist zum Beispiel mittels eines Sensors detektierbar. Der Sensor kann ausgebildet sein, ein Sensorsignal auszusenden, das bei dem Verfahren von dem Steuergerät empfangbar ist. Unter einem Sensorsignal kann im Rahmen der vorliegenden Erfindung ein analoges oder digitales Signal verstanden werden, das ausgebildet ist, Informationen zu übertragen. Das Sensorsignal kann aus den Signalen verschiedener Sensoren zusammengesetzt sein. Das Sensorsignal kann mittels Signalverarbeitung bearbeitbar sein.

Unter einer Körperbewegung kann im Rahmen der vorliegenden Erfindung eine Bewegung des menschlichen Körpers verstanden werden. Dabei kann die Körperbewegung eine Bewegung des ganzen Körpers oder eine Bewegung von einzelnen Bereichen und/oder von einzelnen Gliedmaßen des Körpers sein. Beispielsweise kann die Körperbewegung der Person als pendelartige und/oder schwingende und/oder wippende Bewegung des Oberkörpers und/oder des Rumpfes und/oder des Beckens der Person ausgebildet sein.

Im Rahmen der vorliegenden Erfindung kann eine Angabe, bei der ein Wert A größer/kleiner oder gleich einem Wert B ist, derart verstanden werden, dass der Wert A im Wesentlichen größer/kleiner oder gleich dem Wert B ist. Das heißt, mit anderen Worten, dass der Wert A im Rahmen der Genauigkeit eines zur Steuerung eines Motorantriebs eingerichteten Steuergeräts größer/kleiner oder gleich dem Wert B ist. Eine derartige Angabe ist demzufolge derart zu verstehen, dass für kurze Zeitintervalle der Wert B größer/kleiner als der Wert A sein kann.

Durch das erfindungsgemäße Verfahren und das erfindungsgemäße Steuergerät ist es nunmehr möglich, den Motorantrieb mittels einer einfachen, intuitiven und - im Gegensatz zu einer fahrzeugcharakteristischen, kräftezehrenden Abstoßbewegung - Kräfte schonenden Körperbewegung der Person derart anzusteuern, dass der Motorantrieb eine Antriebskraft auf das Fahrzeug überträgt. Insbesondere wird mittels des Motorantriebs der zuletzt gespeicherte Referenzwert der Geschwindigkeitskenngröße nicht überschritten. Das heißt, mit anderen Worten, dass es das Verfahren und das Steuergerät der Person ermöglichen, durch die kraftsparende Körperbewegung ein Antriebsmoment des Motorantriebs zu aktivieren, um die Geschwindigkeit des Fahrzeugs konstant zu halten beziehungsweise eine Verlangsamung des Fahrzeugs zu reduzieren. Somit bieten das Verfahren und das Steuergerät die Möglichkeit, den Komfort eines Motorantriebs mit der Dynamik und Sportlichkeit der manuellen Abstoßbewegung zu vereinen. Aufgrund der Ansteuerung des Motorantriebs in Abhängigkeit von der Körperbewegung sind zur Ansteuerung des Motorantriebs im Gegensatz zum Stand der Technik keine manuell bedienbaren Schalt- oder Knopfelemente notwendig.

Es ist vorteilhaft, wenn das Steuersignal ausgebildet ist, den Motorantrieb in einen Betriebszustand zu versetzen, in welchem der Motorantrieb mittels der Antriebskraft eine Verlangsamung des Fahrzeugs reduziert. Durch die Reduktion der Verlangsamung wird zum Beispiel das Ausrollen beziehungsweise die Ausrollphase des Fahrzeugs verlängert. Denkbar ist, dass mittels der Antriebskraft des Motorantriebs die Geschwindigkeit des Fahrzeugs trotz einer Erhöhung der Fahrwiderstände, beispielsweise aufgrund von Hangabtriebskräften, konstant gehalten wird. Vorteilhaft ist es auch, wenn der mittels der vom Motorantrieb aufgebrachten Antriebskraft erzielte Wert der Geschwindigkeitskenngröße größer oder gleich einem virtuellen Leerlaufwert der Geschwindigkeitskenngröße ist, wobei der Leerlaufwert der Geschwindigkeitskenngröße dem aktuellen Wert der Geschwindigkeitskenngröße bei deaktiviertem Motorantrieb entspricht. Das heißt, mit anderen Worten, die Fortbewegung des Fahrzeugs wird im Gegensatz zum Stand der Technik nicht durch ein Motorbremsmoment verzögert. Zur Reduktion der Verlangsamung des Fahrzeugs wandelt der Motorantrieb beispielsweise elektrische oder chemische Energie in Bewegungsenergie des Fahrzeugs um. Demzufolge kann das Fahrzeug eine längere Strecke beziehungsweise über einen längeren Zeitraum mit höherer Geschwindigkeit bewegt werden. Dadurch kann die zur Fortbewegung notwendige Muskelkraft reduziert und ein frühzeitiges Ermüden des Fahrers verhindert werden.

Weiterhin ist es vorteilhaft, wenn zur Ansteuerung des Motorantriebs der aktuelle Wert der Geschwindigkeitskenngröße mit dem zuletzt gespeicherten Referenzwert der Geschwindigkeitskenngröße und/oder der aktuelle Wert der Geschwindigkeitskenngröße mit dem virtuellen Leerlaufwert der Geschwindigkeitskenngröße verglichen wird, sodass der mittels der vom Motorantrieb aufgebrachten Antriebskraft erzielte Wert der Geschwindigkeitskenngröße im Intervall zwischen dem Leerlaufwert und dem zuletzt gespeicherten Referenzwert liegt. Der zuletzt gespeicherte Wert kann vor, während oder nach der manuellen Abstoßbewegung detektiert werden. Vorteilhaft ist es, wenn der zuletzt gespeicherte Referenzwert die Maximalgeschwindigkeit des Fahrzeugs während der manuellen Abstoßbewegung repräsentiert. Dadurch wird auf das Fahrzeug mittels des Motorantriebs eine große Antriebskraft beziehungsweise ein großes Antriebsmoment übertragen. Durch diese Ansteuerung des Motorantriebs ist der Wert der Geschwindigkeitskenngröße durch den zuletzt gespeicherten Referenzwert der Geschwindigkeitskenngröße nach oben beschränkt. Diese Ausgestaltung der Geschwindigkeitsregelung kann aus rechtlichen Gründen vorteilhaft sein, da mittels des Motorantriebs die Geschwindigkeit des Fahrzeugs von einem ersten Zeitpunkt zu einem unmittelbar auf den ersten Zeitpunkt folgenden zweiten Zeitpunkt nicht erhöht wird.

Besonders vorteilhaft ist es, wenn das Steuersignal derart von dem zweiten Sensorsignal abhängt, dass der Motorantrieb die Antriebskraft auf das Fahrzeug in Abhängigkeit von einer zeitlichen Länge der Körperbewegung und/oder einer Stärke der mittels der Körperbewegung auf das Fahrzeug ausgeübten Kraft und/oder einer Höhe einer mittels der Körperbewegung ausgeübten Beschleunigung und/oder einer Änderung einer Geschwindigkeit und/oder einer Änderung einer Winkelgeschwindigkeit um eine Raumachse des Fahrzeugs aufbringt. Unter einer Raumachse kann im Rahmen der vorliegenden Erfindung eine Rotationsachse, insbesondere eine Wankachse, eine Nickachse oder eine Gierachse verstanden werden. Denkbar ist beispielsweise, dass durch eine kurze Körperbewegung des Fahrers, bei der eine große Kraft auf das Fahrzeug übertragen wird, mittels des Steuergeräts eine große Antriebskraft über eine lange Zeitdauer auf das Fahrzeug übertragen wird. In einem weiteren Beispiel wird durch eine regelmäßige Körperbewegung wie beispielsweise ein rhythmisches Wippen des Fahrers bei nur geringer Kraftübertragung auf das Fahrzeug der Motorantrieb in einen Betriebszustand versetzt, in dem der Motorantrieb eine geringe Antriebskraft auf das Fahrzeug überträgt. Folglich wird das Steuersignal nicht nur durch das zweite Sensorsignal ausgelöst, sondern in Abhängigkeit von dem zweiten Sensorsignal ausgebildet. Diese Ausgestaltung ermöglicht es, durch unterschiedlich stark ausgeprägte Körperbewegungen von verschiedener zeitlicher Länge gezielt kleinere oder größere Antriebsmomente über kürzere oder längere Zeiträume anzufordern.

Vorteilhaft ist es außerdem, wenn das erste Sensorsignal und/oder das zweite Sensorsignal von mindestens einem Sensorelement ausgegeben und an das Steuergerät übertragen wird. Des Weiteren ist es vorteilhaft, wenn das erste Sensorsignal von mindestens einem Geschwindigkeitssensor und/oder das zweite Sensorsignal von mindestens einem Kraftsensor und/oder mindestens einem Beschleunigungssensor und/oder mindestens einem Drehratensensor ausgegeben und an das Steuergerät übertragen wird. Durch diese Ausgestaltung ist es möglich, das Steuergerät mit den genannten Sensoren elektronisch zu koppeln und die Ansteuerung des Motorantriebs mit oder ohne weitere Signalverarbeitung vorzunehmen. Damit kann das Verfahren zur Steuerung des Motorantriebs mit Hilfe von dem Fachmann als geeignet bekannten Sensorelementen besonders einfach ausgeführt werden.

Das zweite Sensorsignal repräsentiert eine von der Person mittels der Körperbewegung auf das Fahrzeug ausgeübte Kraft. Beispielsweise kann das zweite Sensorsignal eine von der Person mittels einer pendelartigen und/oder schwingenden und/oder wippenden Bewegung des Oberkörpers und/oder des Rumpfes und/oder des Beckens der Person ausgeübte Kraft repräsentieren. Vorteilhaft ist es hierbei, dass die Körperbewegung nicht als manuelle Abstoßbewegung ausgebildet ist. Demnach ist es im Rahmen des Verfahrens möglich, die Körperbewegung von der manuellen Abstoßbewegung zu unterscheiden. Beispielsweise können bei dem Verfahren Änderungen der Geschwindigkeit und/oder der Beschleunigung des Fahrzeugs zur Unterscheidung der manuellen Abstoßbewegung und der Körperbewegung verwendet werden. Dabei ist es denkbar, dass die Geschwindigkeit des Fahrzeugs nicht nur durch die manuelle Abstoßbewegung, sondern auch durch die Körperbewegung der Person vergrößert wird. Zur Differenzierung der Körperbewegung von der manuellen Abstoßbewegung ist es daher besonders vorteilhaft, wenn die bei der Körperbewegung von der Person ausgeübte Kraft kleiner ist als die zur manuellen Abstoßbewegung eingesetzte Kraft. Durch diese Differenzierung ist eine unerwünschte Ansteuerung des Motorantriebs bei dem Verfahren vermeidbar. Die auf das Fahrzeug ausgeübte Kraft ist mittels geeigneter Sensorelemente einfach und kostengünstig bestimmbar. Denkbar ist auch, dass die Körperbewegung anhand eines zeitlichen Verlaufs einer Beschleunigung des Fahrzeugs von der manuellen Abstoßbewegung unterschieden wird. Beispielsweise kann mittels einer inertialen Messeinheit ein Beschleunigungssignal des Fahrzeugs erhalten werden, wobei das Beschleunigungssignal von einem Steuergerät analysierbar ist. Die absolute Größe und/oder die zeitliche Dauer und/oder der zeitliche Verlauf des Beschleunigungssignals kann zur Differenzierung zwischen der manuellen Abstoßbewegung und der Körperbewegung verwendet werden. Beispielsweise ist das Beschleunigungssignal bei der manuellen Abstoßbewegung absolut größer und weist einen steileren Gradienten auf als bei der Körperbewegung. Zusätzlich können zur Unterscheidung zwischen der manuellen Abstoßbewegung und der Körperbewegung eine von dem Fahrer auf das Fahrzeug ausgeübte Kraft und/oder eine räumliche und/oder zeitliche Verteilung mehrerer von dem Fahrer auf das Fahrzeug ausgeübten Kräfte verwendet werden. Des Weiteren ist es denkbar, dass eine absolute und/oder eine relative Änderung der Geschwindigkeit des Fahrzeugs zur Unterscheidung zwischen der manuellen Abstoßbewegung und der Körperbewegung verwendet wird. Beispielsweise kann sich die Geschwindigkeit des Fahrzeugs am Ende der manuellen Abstoßbewegung reduzieren, wenn sich der Fahrer des Fahrzeugs in eine Ausgangsposition auf dem Fahrzeug zurückbewegt, wobei die Ausgangsposition die Position des Fahrers vor der manuellen Abstoßbewegung auf beziehungsweise in dem Fahrzeug repräsentiert.

Von Vorteil ist es auch, wenn das zweite Sensorsignal eine von der Person mittels der Körperbewegung auf eine Trägerstruktur und/oder ein Lenkelement und/oder ein Kraftübertragungselement des Fahrzeugs ausgeübte Kraft repräsentiert. Die Trägerstruktur ist bevorzugt ausgebildet, um eine mit dem Fahrzeug zu befördernde Person aufzunehmen beziehungsweise zu tragen. Das heißt, mit anderen Worten, dass die Trägerstruktur bezüglich ihrer Abmessungen und ihrer Tragkraft ausgebildet ist, eine Person zu tragen. Hierbei ist die Trägerstruktur bevorzugt als Fahrzeugträgerstruktur, insbesondere als Fahrzeugrahmen beziehungsweise Tretrollerrahmen beziehungsweise Rollstuhlrahmen ausgebildet. Das Lenkelement ist zur Steuerung der Fortbewegungsrichtung des Fahrzeugs ausgebildet. Das Lenkelement kann beispielsweise eine Lenkstange oder ein Fahrradlenker sein. Das Kraftübertragungselement ist ausgebildet, die von der Person bei der manuellen Abstoßbewegung auf das Fahrzeug aufgebrachte Kraft aufzunehmen. Das Kraftübertragungselement kann zum Beispiel ein Pedal, ein Greifreifen oder ein Paddel sein. Dadurch können die zur Detektion der Körperbewegung am Fahrzeug vorgesehenen Sensoren auf besonders einfache Weise an dem Fahrzeug angeordnet werden.

Außerdem ist es vorteilhaft, wenn die von der Person mittels der Körperbewegung auf das Fahrzeug ausgeübte Kraft ausgebildet ist, eine Beschleunigung des Fahrzeugs und/oder eine pendelartige Rotationsbewegung mindestens eines Elements des Fahrzeugs um mindestens eine Raumachse zu bewirken und das zweite Sensorsignal die Beschleunigung und/oder die pendelartige Rotationsbewegung repräsentiert. Dadurch kann die Körperbewegung der Person besonders gut von natürlichen nicht zur Ansteuerung des Motorantriebs beabsichtigten Bewegungen der Person am Fahrzeug unterschieden werden. Gleichzeitig ermöglicht diese Ausgestaltung die Detektion der Körperbewegung mittels besonders kompakter Beschleunigungssensoren und/oder Drehratensensoren.

Auch kann ein Auftreten wenigstens eines vordefinierten Verlaufsmusters im zweiten Sensorsignal detektiert werden und das Übertragen des Steuersignals an den Motorantrieb in Abhängigkeit des detektierten Verlaufsmusters erfolgen. Das oder die Verlaufsmuster können dabei jeweils einer vordefinierten Körperbewegung, insbesondere einer Geste, entsprechen. Somit ist es möglich, anhand des zeitlichen Verlaufs des zweiten Sensorsignals unterschiedliche Funktionen des Fahrzeugs zu aktivieren. Beispielsweise können Verlaufsmuster für eine Geschwindigkeits-Halte-Funktion, eine Beschleunigungsfunktion, eine Bremsfunktion und/oder eine Normalbetriebsfunktion vordefiniert sein.

Des Weiteren vorteilhaft ist ein Computerprogramm, das dazu eingerichtet ist, das Verfahren zur Steuerung des Motorantriebs auszuführen. Von Vorteil ist zudem ein maschinenlesbares Speichermedium, auf dem das Computerprogramm gespeichert ist. Bei dem maschinenlesbaren Speichermedium kann es sich zum Beispiel um einen Festplattenspeicher oder einen optischen Speicher handeln. Durch das auf einem Speichermedium gespeicherten Computerprogramm kann das Verfahren auf einfache Art und Weise zur Steuerung des Motorantriebs eines motorisierten Fahrzeugs, zum Beispiel eines motorisch unterstützten Tretrollers, E-Bikes oder Rollstuhls verwendet werden.

### Zeichnungen

Die Erfindung wird nachstehend anhand der beigefügten Zeichnungen beispielhaft näher erläutert. Es zeigen:
- Figur 1: eine schematische Darstellung eines Steuergeräts zur Ausführung eines Verfahrens zur Steuerung eines Motorantriebs mit zwei Sensorelementen und einem Motorantrieb;
- Figur 2a-d: ein schematisches Verlaufsdiagramm der Fortbewegung eines Fahrzeugs mit einem Motorantrieb, mehreren Sensorelementen und einem Steuergerät;
- Figur 3: eine schematische Seitenansicht eines als Tretroller ausgebildeten Fahrzeugs mit einem Motorantrieb, mehreren Sensorelementen und einem Steuergerät zur Ausführung eines Verfahrens zur Steuerung des Motorantriebs;
- Figur 4: ein Ablaufdiagramm eines Verfahrens zur Steuerung eines Motorantriebs;
- Figur 5: eine schematische Detailansicht eines weiteren als Tretroller ausgebildeten Fahrzeugs mit einer Trittfläche, die mehrere Sensorelemente aufweist, auf die durch eine Person Kräfte ausgeübt werden, und
- Figur 6a-d: schematische Zeitdiagramme verschiedener zeitlicher Verläufe eines zweiten Sensorsignals.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung der Elemente verzichtet wird.

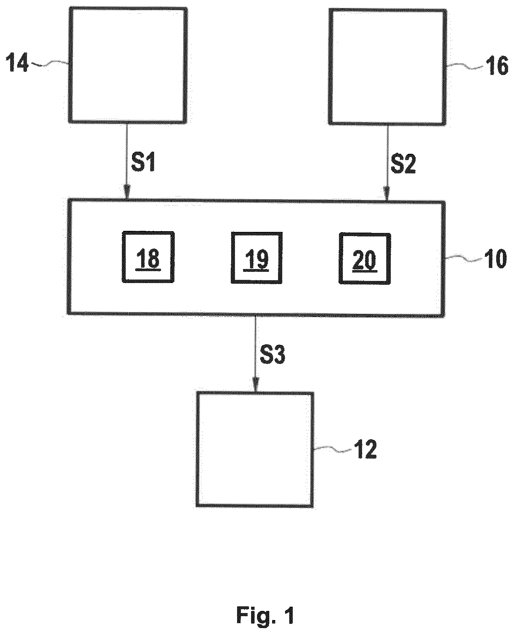

In Figur 1 ist ein Ausführungsbeispiel einer Vorrichtung 10 zur Steuerung eines Motorantriebs 12 beziehungsweise eines Steuergeräts 10 schematisch dargestellt. Die Vorrichtung 10 zur Steuerung des Motorantriebs 12 beziehungsweise das Steuergerät 10 ist mit einem ersten Sensorelement 14, einem zweiten Sensorelement 16 und dem Motorantrieb 12 elektronisch gekoppelt. Hierzu weist das Steuergerät 10 eine nicht dargestellte Schnittstelle auf, mittels derer die Sensorelemente 14, 16 mit dem Steuergerät 10 drahtlos elektronisch koppelbar sind. Alternativ ist die Schnittstelle ausgebildet, die Sensorelemente 14, 16 mit dem Steuergerät 10 drahtgebunden elektronisch zu koppeln. Das Steuergerät 10 für den Motorantrieb 12 ist ausgebildet, ein erstes Sensorsignal S1 von dem ersten Sensorelement 14 und ein zweites Sensorsignal S2 von dem zweiten Sensorelement 16 zu empfangen sowie ein Steuersignal S3 an den Motorantrieb 12 zu übertragen. Das Steuergerät 10 weist eine Speichereinheit 18, eine Recheneinheit 19 und eine Vergleichseinheit 20 auf.

Das erste Sensorsignal S1 repräsentiert eine Geschwindigkeit. Zum Beispiel repräsentiert das erste Sensorsignal S1 die Geschwindigkeit eines Fahrzeugs, das mit dem Steuergerät 10 verbunden ist. Bei dem ersten Sensorelement 14 handelt es sich um einen Geschwindigkeitssensor 14. Beispielsweise ist der Geschwindigkeitssensor 14 ein Hallsensor 14, der die Drehzahl eines Rades des Fahrzeugs detektiert und daraus die Geschwindigkeit des Fahrzeugs bestimmt. Der Geschwindigkeitssensor 14 ist ausgebildet, Informationen über die Geschwindigkeit des Fahrzeugs mittels des ersten Sensorsignals S1 an das Steuergerät 10 zu übertragen.

Das zweite Sensorsignal S2 repräsentiert eine Körperbewegung einer Person, die sich mittels des Fahrzeugs fortbewegt. Bei der Person handelt es sich beispielsweise um einen Fahrer des Fahrzeugs. Bei dem zweiten Sensorelement 16 handelt es sich um einen Kraftsensor 16. Der Kraftsensor 16 ist ausgebildet, eine von dem Fahrer mittels der Körperbewegung auf das Fahrzeug ausgeübte Kraft zu detektieren. Die Kraft kann zum Beispiel eine Druckkraft oder eine Zugkraft oder ein Drehmoment sein. Der Kraftsensor 16 kann Informationen über die von dem Fahrer auf das Fahrzeug ausgeübte Kraft mittels des zweiten Sensorsignals S2 an das Steuergeräts 10 übertragen. Alternativ kann das zweite Sensorelement 16 auch als Beschleunigungssensor 16 oder als Drehratensensor 16 oder als eine Kombination der genannten Sensoren ausgebildet sein. Denkbar ist, dass die Größe der Kraft einen Schwellenwert des Kraftsensors 16 überschreiten muss, damit ein Sensorsignal S2 von dem Kraftsensor 16 an das Steuergerät 10 übertragen wird. Alternativ überträgt der Kraftsensor 16 kontinuierlich Informationen über die aktuelle Kraft auf das Fahrzeug an das Steuergerät 10.

In einer Ausführungsform empfängt das Steuergerät 10 kontinuierlich das erste Sensorsignal S1, das einen aktuellen Wert der Geschwindigkeit des Fahrzeugs repräsentiert. Dieser aktuelle Wert der Geschwindigkeit wird von dem Steuergerät 10 mittels der Speichereinheit 18 fortlaufend gespeichert. In einer alternativen Ausführungsform empfängt und speichert das Steuergerät 10 das erste Sensorsignal S1, nachdem das Steuergerät 10 das zweite Sensorsignal S2 empfangen hat.

Empfängt das Steuergerät 10 das zweite Sensorsignal S2, sendet das Steuergerät 10 in Abhängigkeit von dem zweiten Sensorsignal S2 ein Steuersignal S3 an den Motorantrieb 12. Hierbei ist das Steuergerät 10 ausgebildet, das zweite Sensorsignal S2 mit einem oder mehreren in dem Steuergerät gespeicherten Schwellenwerten zu vergleichen. Basierend auf dem Vergleich des zweiten Sensorsignals S2 mit den Schwellenwerten wird das Steuersignal S3 an den Motorantrieb 12 übertragen. Mittels des Steuersignals S3 wird der Motorantrieb 12 in einen Betriebszustand versetzt, in dem er eine Antriebskraft auf das Fahrzeug überträgt. Dadurch wird beispielsweise eine Ausrollphase des Fahrzeugs verlängert.

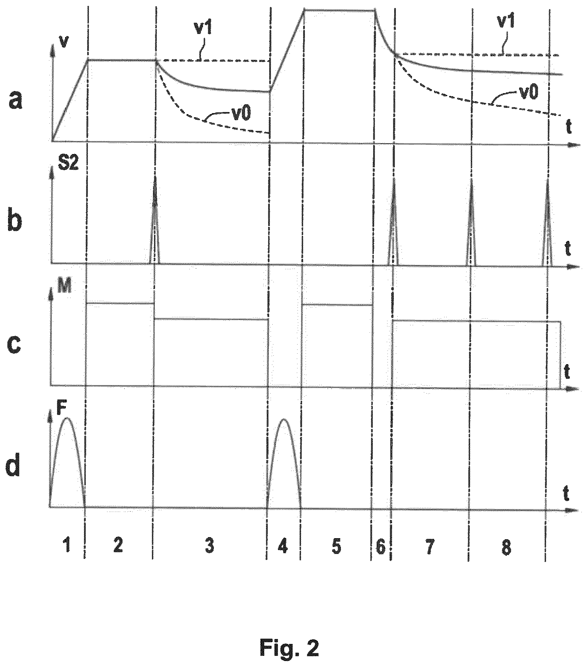

In Figur 2a-d wird ein schematisches Verlaufsdiagramm der Fortbewegung eines Fahrzeugs mit einem Motorantrieb 12, mehreren Sensorelementen und einem Steuergerät 10 zur Steuerung des Motorantriebs 12 gezeigt. Figur 2a zeigt eine Geschwindigkeit v des Fahrzeugs in Abhängigkeit von der Zeit t. Figur 2b zeigt ein Steuersignal S2 in Abhängigkeit von der Zeit t. Figur 2c zeigt ein vom Motorantrieb 12 bereitgestelltes Antriebsmoment M in Abhängigkeit von der Zeit t, wobei das Antriebsmoment eine zum Antriebsmoment näherungsweise proportionale Antriebskraft auf das Fahrzeug bewirkt. Figur 2d zeigt eine von einem Fahrer des Fahrzeugs zu einer manuellen Abstoßbewegung auf einen Untergrund ausgeübte Kraft F in Abhängigkeit von der Zeit t, wobei sich das Fahrzeug relativ zu dem Untergrund fortbewegt.

Der Zeitverlauf der Fortbewegung des Fahrzeugs ist in verschiedene aufeinanderfolgende Phasen unterteilt. In Phase 1 führt der Fahrer des Fahrzeugs die manuelle Abstoßbewegung aus. Der Fahrer übt eine Druckkraft F auf den Untergrund aus, wodurch die Geschwindigkeit v des Fahrzeugs größer wird. Das Steuergerät 10 ist ausgebildet, die manuelle Abstoßbewegung beispielsweise anhand einer starken Beschleunigung des Fahrzeugs und charakteristischen Druck- und/oder Zugkräften auf das Fahrzeug zu erkennen. Alternativ kann das Steuergerät die manuelle Abstoßbewegung anhand einer Geschwindigkeitszunahme des Fahrzeugs und/oder dem zeitlichen Verlauf der Geschwindigkeitszunahme und/oder charakteristischen Druck- und/oder Zugkräften und/oder einer Verteilung der Druck- und/oder Zugkräfte auf das Fahrzeug erkennen.

Nach dem Abschluss der manuellen Abstoßbewegung beginnt Phase 2. Das Steuergerät 10 erkennt das Ende der Abstoßbewegung und schaltet wie aus dem Stand der Technik bekannt den Motorantrieb 12 nach Abschluss der manuellen Abstoßbewegung automatisch zu. Das Steuergerät 10 erkennt das Ende der Abstoßbewegung daran, dass die Geschwindigkeit des Fahrzeugs während der manuellen Abstoßbewegung zunimmt und bei Abschluss der manuellen Abstoßbewegung abnimmt. Hierbei resultiert die Abnahme der Geschwindigkeit bei Abschluss der manuellen Abstoßbewegung aus einer Bewegung des Fahrers, wobei der Fahrer sich mittels dieser Bewegung in eine Fortbewegungsposition auf dem Fahrzeug positioniert. Das Steuergerät 10 überträgt die Antriebskraft auf das Fahrzeug, sodass die Geschwindigkeit v des Fahrzeugs konstant gehalten wird. Alternativ kann das Steuergerät 10 eine geringere Antriebskraft auf das Fahrzeug übertragen, sodass ein Ausrollen des Fahrzeugs aufgrund von Reibungseffekten und/oder einer Vergrößerung von Fahrwiderständen verlangsamt beziehungsweise die Ausrollphase verlängert wird. Nach einer festgelegten Zeitdauer t beziehungsweise einer festgelegten zurückgelegten Wegstrecke schaltet sich der Motorantrieb 12 wie im Stand der Technik automatisch ab, um einen Energiespeicher wie zum Beispiel eine Batterie eines Elektromotors zu schonen.

Mittels einer Körperbewegung löst der Fahrer das Sensorsignal S2 aus, das von dem Steuergerät 10 empfangen wird und den Beginn von Phase 3 festlegt. Überschreitet das Sensorsignal S2 einen festgelegten Schwellenwert für das Sensorsignal S2, überträgt das Steuergerät 10 ein Steuersignal S3 an den Motorantrieb 12, um den Motorantrieb 12 wieder zu aktivieren. Mittels des Steuersignals S3 wird der Motorantrieb 12 in einen Betriebszustand versetzt, in welchem er im Gegensatz zum Stand der Technik eine Antriebskraft auf das Fahrzeug überträgt und die Fortbewegung des Fahrzeugs unterstützt. Hierbei wird der Motorantrieb 12 derart angesteuert, dass mittels des Antriebskraft die Geschwindigkeit v des Fahrzeugs nicht vergrößert wird und die mittels der Antriebskraft erzeugte Geschwindigkeit v in einem Intervall zwischen einer Leerlaufgeschwindigkeit v0 und einer Referenzgeschwindigkeit v1 liegt. Die Referenzgeschwindigkeit v1 entspricht einem zuletzt gespeicherten Wert der Geschwindigkeit v, wobei der aktuelle Wert der Geschwindigkeit v von einem Geschwindigkeitssensor 14 mittels des ersten Sensorsignals S1 an das Steuergerät 10 übertragen und von diesem gespeichert wird. Die Leerlaufgeschwindigkeit v0 entspricht einem Leerlaufwert der Geschwindigkeit v, das heißt der Geschwindigkeit v bei deaktiviertem Motorantrieb 12. Im Allgemeinen können die Leerlaufgeschwindigkeit v0 und die Referenzgeschwindigkeit v1 zeitlich veränderbar sein. Durch die Körperbewegung des Fahrers wird in Abhängigkeit von dem zweiten Sensorsignal ein Übertragen der Antriebskraft des Motorantriebs 12 auf das Fahrzeug ausgelöst, wodurch die Abnahme der Geschwindigkeit v beim Ausrollen des Fahrzeugs verlangsamt wird. Die in Phase 3 vom Motorantrieb 12 an das Fahrzeug übertragene Antriebskraft ist in dieser Ausführungsform konstant und kleiner als die vom Motorantrieb 12 im Anschluss an die manuelle Abstoßbewegung automatisch übertragene Antriebskraft. Die in Phase 3 vom Motorantrieb 12 an das Fahrzeug übertragene Antriebskraft kann in einer alternativen Ausführungsform zeitlich variieren und/oder größer oder gleich der vom Motorantrieb 12 im Anschluss an die manuelle Abstoßbewegung automatisch übertragenen Antriebskraft sein.

Durch eine erneute manuelle Abstoßbewegung leitet der Fahrer Phase 4 ein. Bei der manuellen Abstoßbewegung übt der Fahrer die Kraft F auf dem Untergrund aus und erhöht dadurch die Geschwindigkeit v des Fahrzeugs. Das Steuergerät 10 erkennt die manuelle Abstoßbewegung als solche und deaktiviert bei aktiviertem Motorantrieb mittels eines Steuersignals den Motorantrieb 12, sodass der Motorantrieb 12 während der manuellen Abstoßbewegung keine Antriebskraft auf das Fahrzeug überträgt. Hierbei erkennt das Steuergerät 10 den Beginn der manuellen Abstoßbewegung bei einem Fahrzeug mit einem Elektromotor 12 beispielsweise daran, dass durch die manuelle Abstoßbewegung aufgrund des Generatorprinzips eine Vergrößerung eines Induktionsstroms in dem Motorantrieb 12 bewirkt wird. Denkbar ist, dass bei einem Fahrzeug mit einem Steuergerät 10, einem Motorantrieb 12 und mindestens einem Rad der Motorantrieb 12 während der manuellen Abstoßbewegung von dem Rad mechanisch entkoppelt ist. Nach Abschluss der Abstoßbewegung wird eine Drehzahl des Motorantriebs 12 zunächst auf die aktuelle Drehzahl des Rads eingestellt. Anschließend wird der Motorantrieb 12 mechanisch mit dem Rad gekoppelt und mittels eines Drehmoments auf das Rad eine Antriebskraft auf das Fahrzeug übertragen. Analog zu Phase 2 erkennt das Steuergerät 10 das Ende des Abstoßvorgangs. Daraufhin schaltet sich der Motorantrieb 12 in Phase 5 automatisch zu und hält mittels eines geeigneten Antriebsmoments beziehungsweise einer geeigneten Antriebskraft die Geschwindigkeit v des Fahrzeugs konstant.

Nach einer festgelegten Zeitdauer oder einer festgelegten zurückgelegten Wegstrecke des Fahrzeugs schaltet sich der Motorantrieb 12 wie in Phase 2 automatisch ab, wodurch das Fahrzeug mit Beginn von Phase 6 vergleichbar zu einem nicht-motorisierten Fahrzeug ausrollt und seine Geschwindigkeit v verlangsamt. Rollt das Fahrzeug eine Fahrbahn mit einer Steigung hinab, ist es möglich, dass die Geschwindigkeit des Fahrzeugs ohne eine Abstoßbewegung des Fahrers und trotz abgeschalteten Motorantriebs 12 aufgrund der Hangabtriebskräfte vergrößert wird oder konstant bleibt. Die Dauer der Ausrollphase mit deaktiviertem Motorantrieb 12 beziehungsweise die zurückgelegte Strecke während der Ausrollphase mit deaktiviertem Motorantrieb 12 wird durch den Fahrer bestimmt.

Nach Ausrollen des Fahrzeugs für eine gewisse Zeitdauer löst der Fahrer mittels einer Körperbewegung erneut das zweite Sensorsignal S2 aus, das an das Steuergerät 10 übertragen wird. Mit der Körperbewegung des Fahrers beginnt Phase 7. Überschreitet das zweite Sensorsignal S2 einen Schwellenwert für das zweite Sensorsignal S2, wird der Motorantrieb 12 in den Betriebszustand versetzt, in dem er die Antriebskraft auf das Fahrzeug überträgt. Die mittels des Motorantriebs 12 erzeugte Geschwindigkeit v des Fahrzeugs nimmt kontinuierlich ab und liegt hierbei im Intervall zwischen der Leerlaufgeschwindigkeit v0 und der Referenzgeschwindigkeit v1.

Phase 8 zeigt wie mittels einer erneuten Körperbewegung erneut das Sensorsignal S2 an das Steuergerät 10 übertragen wird. Mittels des resultierenden Steuersignals S3, das von dem Steuergerät 10 an den Motorantrieb 12 übertragen wird, wird das Antriebsmoment beziehungsweise die Antriebskraft des Motorantriebs 12 aufrechterhalten. Folglich kann mittels regelmäßiger Körperbewegungen des Fahrers - ohne dass eine manuelle Abstoßbewegung notwendig ist - die Antriebskraft des Motorantriebs 12 wiederholt angefordert und auf das Fahrzeug übertragen werden. In Abhängigkeit von der Konfiguration des Steuergeräts 10 und des Motorantriebs 12 kann somit die Geschwindigkeit v des Fahrzeugs in einem Intervall zwischen der Leerlaufgeschwindigkeit v0 und der Referenzgeschwindigkeit v1 gesteuert werden. Durch diese Ausgestaltung wird mittels des Steuergeräts 10 eine Geschwindigkeitsregelung des Fahrzeugs realisiert, bei welcher die Antriebskraft des Motorantriebs 12 die Geschwindigkeit v des Fahrzeugs in Abhängigkeit von der Zeit nicht vergrößert.

Das Steuergerät 10 ist ausgebildet, das in Abhängigkeit von der Körperbewegung des Fahrers ausgelöste Sensorsignal S2 jederzeit und insbesondere unabhängig vom Betriebszustand des Motorantriebs 12 zu empfangen. Das heißt, mit anderen Worten, dass das Steuergerät 10 ausgebildet ist, das Sensorsignal S2 bei aktiviertem und deaktiviertem Motorantrieb 12 empfangen. Das in Abhängigkeit von dem Sensorsignal S2 an den Motorantrieb 12 übertragene Steuersignal aktiviert einen deaktivierten Motorantrieb 12 und versetzt den Motorantrieb 12 in einen Betriebszustand, in welchem der Motorantrieb 12 eine Antriebskraft auf das Fahrzeug überträgt und eine Ausrollphase des Fahrzeugs verlängert wird, siehe Phase 6 und Phase 7. Überträgt das Steuergerät 10 das Steuersignal an einen bereits aktivierten Motorantrieb, so wird der Betriebszustand des Motorantriebs 12 aufrecht erhalten. Hierbei wird die Zeitdauer, nach welcher der Motorantrieb 12 automatisch deaktiviert wird, in Abhängigkeit von dem Steuersignal mittels der Recheneinheit 19 neu berechnet. Das heißt, mit anderen Worten, dass die zeitliche Gesamtlänge der Ausrollphase bei aktiviertem Motorantrieb 12 durch die Körperbewegung vergrößert wird, siehe Phase 7 und Phase 8.

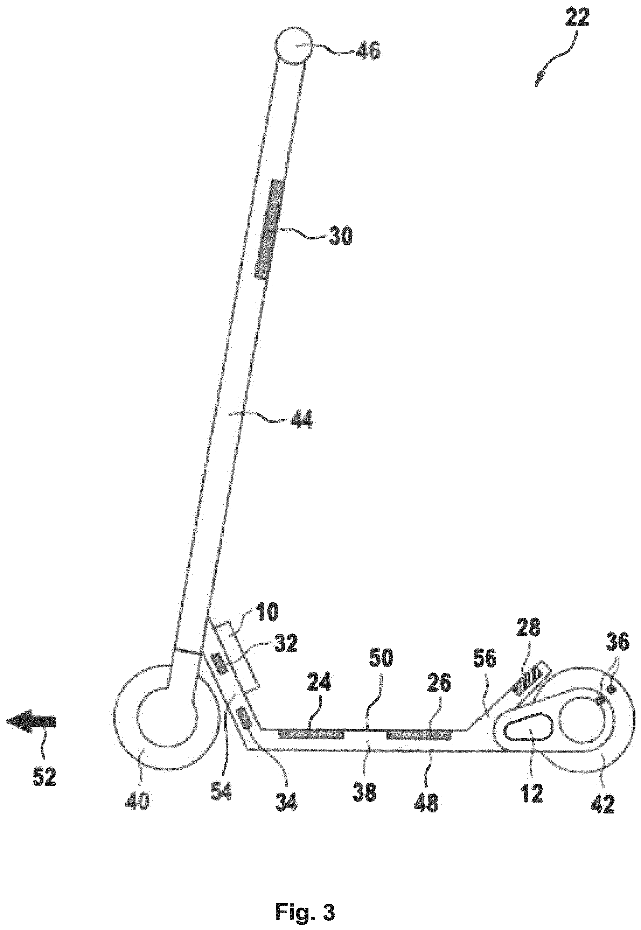

In Figur 3 ist ein Fahrzeug beziehungsweise ein Tretroller dargestellt, wobei das Fahrzeug in seiner Gesamtheit mit der Bezugsziffer 22 versehen ist.

Das Fahrzeug 22 beziehungsweise der Tretroller 22 weist einen Motorantrieb 12, ein Steuergerät 10 für den Motorantrieb 12 und sieben Sensorelemente 24, 26, 28, 30, 32, 34, 36 auf. Ferner weist der Tretroller 22 eine Trägerstruktur 38, zwei Räder 40, 42 und einen Lenker 44 mit einer Lenkstange 46 zum Lenken des Tretrollers 22 auf.

Die Trägerstruktur 38 ist als Tretrollerträgerstruktur 38 beziehungsweise Tretrollerrahmen 38 ausgebildet. Die Trägerstruktur 38 weist einen Trittbereich 48 auf. Der Trittbereich 48 weist ein Trittbrett 50 auf. Der Trittbereich 48 dient zur Aufnahme einer zu befördernden Person, insbesondere eines Fahrers. Die Trägerstruktur 38 ist demnach ausgebildet, um eine mit dem Tretroller 22 zu befördernde Person aufzunehmen beziehungsweise zu tragen.

An einem in einer Fahrtrichtung 52 des Tretrollers 22 vorderen Bereich 54 der Trägerstruktur 38 sind das Steuergerät 10, ein Drehratensensor 34 und ein Beschleunigungssensor 32 angeordnet. Der Drehratensensor 34 ist ausgebildet, vom Fahrer bei der Körperbewegung auf den Tretroller 22 übertragene pendelartige Bewegungen zu detektieren. Bei den pendelartigen Bewegungen handelt es sich um eine zyklische Gewichtsverlagerung auf dem Trittbrett 50 mit den beiden Füßen des Fahrers. Hierbei kann das Gewicht des Fahrers zyklisch und/oder wellenförmig zwischen einem Standbein und einem abstützenden Bein verlagert werden. Alternativ kann an beiden Füßen des Fahrers das Gewicht zyklisch von der Ferse des Fußes auf den Fußballen verlagert werden. Der Beschleunigungssensor 32 ist ausgebildet, bei der Körperbewegung des Fahrers auf den Tretroller 22 ausgeübte Beschleunigungen zu detektieren. Der Beschleunigungssensor 32 und der Drehratensensor 34 können in ihrer Gesamtheit als eine sechsachsige inertiale Messeinheit ausgebildet sein. Hierbei kann die sechsachsige inertiale Messeinheit Beschleunigungen entlang von drei verschiedenen, insbesonderer von drei orthogonalen, Raumrichtungen und Drehungen um drei verschiedene, insbesonderer drei orthogonale, Raumrichtungen detektieren.

Im Bereich des Trittbretts 50 sind zwei Kraftsensoren 24, 26 angeordnet. An einem in Fahrtrichtung 52 des Tretrollers 22 hinteren Bereich 56 der Trägerstruktur 38 ist ein dritter Kraftsensor 28 angeordnet. Die Kraftsensoren 24, 26, 28 sind ausgebildet, die oben beschriebenen, mittels der Füße des Fahrers ausgeübten Druckkräfte auf den Tretroller 22 zu detektieren. Bei den Kraftsensoren 24, 26, 28 handelt es sich um Dehnungsmessstreifen. Die Kraftsensoren 24, 26, 28 sind ausgebildet, relative und/oder absolute Werte der Druckkräfte auf den Tretroller 22 zu detektieren. Denkbar ist, dass die Kraftsensoren 24, 26, 28 derart auf dem Tretroller 22 angeordnet sind, dass aus den Sensorsignalen der Kraftsensoren 24, 26, 28 bestimmbar ist, ob sich beide Füße des Fahrers des Tretrollers 22 auf dem Trittbrett 50 befinden. Durch diese Anordnung der Kraftsensoren 24, 26, 28 ist die Körperbewegung von der manuellen Abstoßbewegung unterscheidbar.

Am vorderen Bereich 54 der Trägerstruktur 38 sind der Lenker 44 und das vordere Rad 40 des Tretrollers 22 angeordnet. Der Lenker 44 ist stangenförmig ausgebildet und zu der Trägerstruktur 38 drehbar gelagert. Der Lenker 44 weist eine Lenkstange 46 und einen vierten Kraftsensor 30 auf. Der vierte Kraftsensor 30 ist ausgebildet, bei der oben beschriebenen Körperbewegung des Fahrers auf den Lenker 44 ausgeübte Druckkräfte und/oder Zugkräfte zu detektieren. Die Kraftsensoren 24, 26, 28, 30 sind ausgebildet, bei der Körperbewegung des Fahrers auftretende Gewichtsverlagerungen auf den Tretroller 22 zu detektieren.

Am hinteren Bereich 56 der Trägerstruktur 38 sind das hintere Rad 42 des Tretrollers 22 und der als Elektromotor 12 ausgebildete Motorantrieb 12 angeordnet. Im Bereich des hinteren Rades 42 ist ein Geschwindigkeitssensor 36 angeordnet. Der Geschwindigkeitssensor 36 detektiert die Drehzahl des hinteren Rades 42 und bestimmt daraus die Geschwindigkeit des Tretrollers 22. Beispielsweise handelt es sich bei dem Geschwindigkeitssensor 36 um einen Hallsensor 36. Der Geschwindigkeitssensor 36 ist ausgebildet, bereits geringfügige Veränderungen der Geschwindigkeit desTretrollers 22 bei der Körperbewegung zu detektieren. Somit können Änderungen der Geschwindigkeit des Tretrollers 22 zur Detektion der Körperbewegung des Fahrers und/oder zur Unterscheidung der Körperbewegung des Fahrers von der manuellen Abstoßbewegung verwendet werden. Das hintere Rad 42 ist mit dem Elektromotor 12 gekoppelt. Der Elektromotor 12 ist ausgebildet, ein Drehmoment auf das hintere Rad 42 zu übertragen.

Die vier Kraftsensoren 24, 26, 28, 30, der Beschleunigungssensor 32, der Drehratensensor 34 und der Geschwindigkeitssensor 36 sind in ihrer Gesamtheit ausgebildet, die Körperbewegung des Fahrers zu detektieren. Von den Sensorelementen 24, 26, 28, 30, 32, 34, 36 an das Steuergerät 10 übertragene Sensorsignale werden von dem Steuergerät 10 verwendet, die Körperbewegung beispielsweise von der manuellen Abstoßbewegung, insbesondere der abstoßenden Fußbewegung, und/oder von natürlichen, nicht zur Ansteuerung des Steuergeräts 10 beabsichtigten Körperbewegungen des Fahrers zu unterscheiden.

Die vier Kraftsensoren 24, 26, 28, 30, der Beschleunigungssensor 32, der Drehratensensor 34, der Geschwindigkeitssensor 36 und der Elektromotor 12 sind elektronisch mit dem Steuergerät 10 gekoppelt. Die Sensoren 24, 26, 28, 30, 32, 34, 36 und der Elektromotor 12 sind mit dem Steuergerät 10 über eine Kabelverbindung elektronisch verbunden. Alternativ kann die elektronische Kopplung verbindungslos über ein Funksignal realisiert sein.

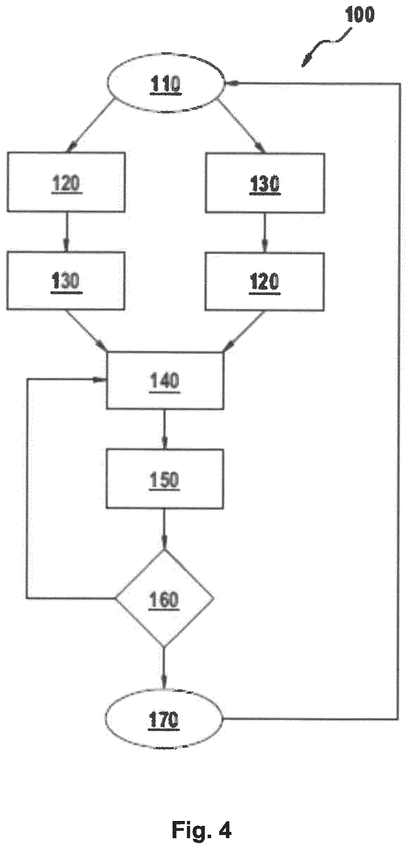

Das in Figur 1 beschriebene Steuergerät 10 wird wie in Figur 2 und nachfolgend in Figur 4 beschrieben zur Ansteuerung des Motorantriebs 12 verwendet. Der Geschwindigkeitssensor 36 detektiert und überträgt die Geschwindigkeit an das Steuergerät 10 mittels des ersten Sensorsignals S1. Die von den vier Kraftsensoren 24, 26, 28, 30, dem Beschleunigungssensor 32 und dem Drehratensensor 34 in Folge der Körperbewegung des Fahrers an das Steuergerät 10 übertragenen Signale werden von dem Steuergerät 10 zu dem zweiten Sensorsignal S2 verarbeitet. Das Steuergerät 10 sendet das Steuersignal S3 an den Motorantrieb 12 beziehungsweise den Elektromotor 12. Dadurch überträgt Elektromotor 12 eine Antriebskraft auf den Tretroller 22, sodass sich die Ausrollphase des Tretrollers 22 verlängert.

Figur 4 zeigt ein Ablaufdiagramm eines Verfahrens zur Steuerung eines Motorantriebs 12 mittels des Steuergeräts 10. Das Verfahren ist in seiner Gesamtheit mit dem Bezugszeichen 100 versehen. Im Schritt 110 beginnt das Verfahren. In Schritt 120 empfängt das Steuergerät 10 das erste Sensorsignal S1 von dem ersten Sensorelement 14, wobei das erste Sensorsignal S1 die Geschwindigkeit eines Fahrzeugs repräsentiert. Das Steuergerät 10 speichert das erste Sensorsignal S1 mittels der Speichereinheit 18. In Schritt 130 empfängt das Steuergerät 10 das zweite Sensorsignal S2 von dem zweiten Sensorelement 16, wobei das zweite Sensorsignal S2 die Körperbewegung einer Person, insbesondere eines Fahrers des Fahrzeugs, repräsentiert. Schritt 120 und Schritt 130 können auch in umgekehrter Reihenfolge ausgeführt werden.

In Schritt 140 überträgt das Steuergerät 10 das Steuersignal S3 an den Motorantrieb 12. In Schritt 150 empfängt das Steuergerät 10 erneut das erste Sensorsignal S1 von dem ersten Sensorelement 14, wobei das erste Sensorsignal S1 die aktuelle Geschwindigkeit des Fahrzeugs repräsentiert. In Schritt 160 vergleicht die Vergleichseinheit 20 des Steuergeräts 10 den aktuellen Wert der Geschwindigkeit des Fahrzeugs mit dem zuletzt mittels der Speichereinheit 18 gespeicherten Wert der Geschwindigkeit des Fahrzeugs. Ist der aktuelle Wert der Geschwindigkeit größer als der zuletzt gespeicherte Wert der Geschwindigkeit, endet das Verfahren in Schritt 170 und beginnt erneut in Schritt 110. Ist der aktuelle Wert der Geschwindigkeit kleiner oder gleich dem zuletzt gespeicherten Wert der Geschwindigkeit wird das Verfahren in Schritt 140 fortgesetzt.

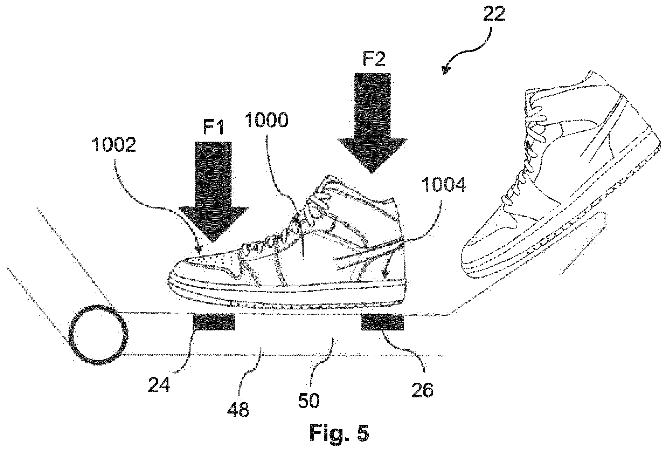

Figur 5 zeigt eine schematische Detailansicht eines weiteren, ebenfalls als Tretroller ausgebildeten Fahrzeugs 22. Insbesondere ist sein Trittbereich 48 mit einem Trittbrett 50 erkennbar. Dabei entspricht das Fahrzeug 22 mit seinem Trittbereich 48 und seinem Trittbrett 50 soweit im Folgenden nicht anders genannt im Wesentlichen den vorangehend beschriebenen Fahrzeugen.

Im Bereich des Trittbretts 50 sind zwei Sensorelemente 24, 26 angeordnet. Die Sensorelemente 24, 26 sind als Kraftsensoren ausgebildet. Insbesondere sind sie ausgebildet, auf das Trittbrett 50 wirkende Kräfte, insbesondere Aufstandskräfte, F1, F2 einer Person, hier symbolisiert durch einen Schuh 1000 mit einem Fußballenbereich 1002 und einem Fersenbereich 1004, zu erfassen. Die von den Sensorelementen 24, 26 erfassten Sensorsignale bilden bei dieser Ausführungsform zusammen ein zweites Sensorsignal. Das zweite Sensorsignal kann beispielsweise von einem dem Steuergerät 10 (Figur 1) entsprechenden Steuergerät empfangen werden.

Die beiden Sensorelemente 24, 26 sind voneinander beanstandet angeordnet. Das Sensorelement 24 ist dazu so angeordnet, dass es die Kraft F1 im Fußballenbereich 1002 erfasst. Das Sensorelement 26 ist so angeordnet, dass es die Kraft F2 im Fersenbereich 1004 erfasst.

Somit befindet sich jeweils eines der Sensorelemente 24, 26 unter einem Fußballen bzw. unter einer Ferse der Person oder zumindest jeweils in deren Nähe oder Bereich. Dadurch lässt sich durch die beiden Sensorelemente 24, 26 eine jeweilige Gewichtsverteilung der Person anhand des Verhältnisses der beiden Kräfte F1, F2 zueinander ermitteln. Somit können insbesondere Gewichtsverlagerungen der Person detektiert werden.

Bei einer manuellen Abstoßbewegung, bei der das Fahrzeug 22 infolge der Abstoßbewegung seine Geschwindigkeit ändert, kommt es üblicherweise zu Gewichtsverlagerungen zwischen dem Fersenbereich 1004 und dem Fußballenbereich 1002. Diese Gewichtsverlagerungen werden durch das Vor- bzw. Zurückschwingen eines abstoßenden Fußes (in Figur 5 nicht dargestellt) der Person hervorgerufen. Eine manuelle Abstoßbewegung kann somit dadurch detektiert werden, dass eine oder mehrere Gewichtsverlagerungen und eine oder mehrere Geschwindigkeitsänderungen, insbesondere einen vordefinierten Schwellwert überschreitende Beschleunigungen, detektiert werden.

Im Unterschied zu einer manuellen Abstoßbewegung führt eine Körperbewegung, die nicht als Abstoßbewegung ausgebildet ist, üblicherweise zwar auch zu ein oder mehreren Gewichtsverlagerungen, nicht jedoch zu wesentlichen Geschwindigkeitsänderungen des Fahrzeugs 22, insbesondere nicht zu einer wesentlichen Beschleunigung. Bei diesem Ausführungsbeispiel ist dazu ein Kriterium, dass keine Beschleunigungen des Fahrzeugs 22 auftreten, die betragsmäßig einen vordefinierten Schwellwert überschreiten. Somit werden durch gleichzeitige Prüfung, ob ein oder mehrere Gewichtsverlagerungen und/oder ein oder mehrere Geschwindigkeitsänderungen vorliegen, Körperbewegungen von manuellen Abstoßbewegungen unterschieden.

Insbesondere werden bei diesem Ausführungsbeispiel ein oder mehrere Körperbewegungen detektiert, indem in dem zweiten Sensorsignal bzw. in den Sensorsignalen der Sensorelemente 24, 26 das Auftreten eines oder mehrerer vordefinierbarer, insbesondere vordefinierter, Verlaufsmuster detektiert wird. Je nach erkanntem Verlaufsmuster wird dann eine bestimmte, insbesondere vordefinierte, Funktion des Fahrzeugs 22 ausgewählt. In Abhängigkeit der ausgewählten Funktion wird daraufhin ein der jeweiligen Funktion entsprechendes Steuersignal S3 (Figur 1) erzeugt und an den Motorantrieb 12 (Figur 1) übertragen. Somit erfolgt das Übertragen des Steuersignals S3 an den Motorantrieb 12 in Abhängigkeit des detektierten Verlaufsmusters.

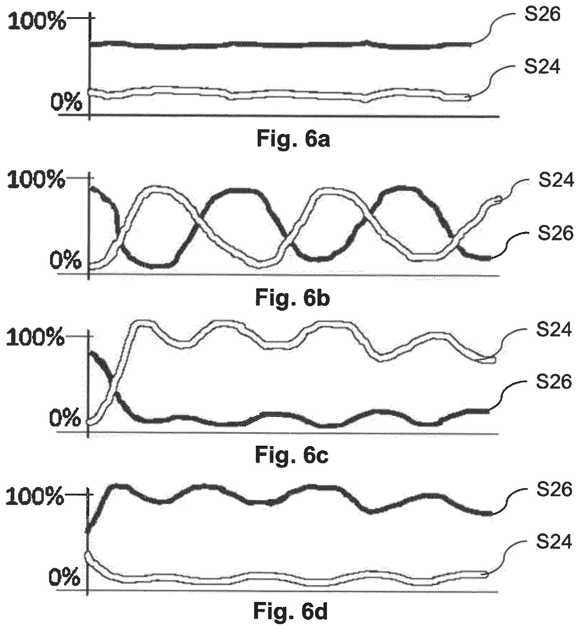

Figuren 6a-d zeigen schematische Zeitdiagramme verschiedener zeitlicher Verläufe eines Sensorsignals S24 des Sensorelements 24 (Figur 5) sowie eines Sensorsignals S26 des Sensorelements 26 (Figur 5) bzw. zeitliche Verläufe des in diesem Ausführungsbeispiel die Sensorsignale S24 und S26 umfassenden zweiten Sensorsignals. Die zeitlichen Verläufe der Sensorsignale S24 bzw. S26 ergeben sich dabei durch unterschiedliche Arten von Körperbewegungen der Person. Die Körperbewegungen sind dazu - wie im Folgenden näher erläutert werden wird - jeweils nicht als manuelle Abstoßbewegung ausgebildet. In diesem Ausführungsbeispiel gehen sie somit nicht mit einer Beschleunigung des Fahrzeugs 22 (Figur 5) unmittelbar durch die jeweilige Körperbewegung selbst einher.

Zu erkennen sind insbesondere vier verschiedene, vordefinierte Verlaufsmuster, denen in diesem Ausführungsbeispiel vier verschiedene Funktionen des Fahrzeugs 22 zugeordnet sind. Entsprechend dieser verschiedenen Funktionen kann somit der Motorantrieb 12 (Figur 1) auf vier verschiedene Arten angesteuert werden.

In den Zeitdiagrammen der Figuren 6a-d sind jeweils niedrige Signalstärken im Bereich um "0%" und hohe Signalstärken im Bereich um "100%" aufgetragen. Mittlere Signalstärken sind entsprechend zwischen "0%" und "100%" aufgetragen.

Im Falle der Figur 6a weist das Sensorsignal S26 durchgängig höhere Signalstärken auf als das Sensorsignal S24. Beide Sensorsignale S24, S26 sind im Wesentlichen zeitlich konstant. In diesem Ausführungsbeispiel entspricht ein solches Verlaufsmuster einer Normalbetriebsfunktion des Fahrzeugs 22. Um ein solches Verlaufsmuster zu generieren, belastet die Person den Fersenbereich 1004 (Figur 5) dauerhaft und im Wesentlichen konstant stärker als den Fußballenbereich 1002 (Figur 5). Beispielsweise kann die Person dazu auf dem Fahrzeug 22 (Figur 5) aufrecht oder leicht nach hinten geneigt stehen.

Im Falle der Figur 6b wechseln die Signalstärken der Sensorsignale S24, S26 gegenläufig zwischen niedrigen und hohen Signalstärken. Für ein solches Verlaufsmuster sind der Fußballenbereich 1002 und der Fersenbereich 1004 abwechselnd zu belasten. Dies kann die Person beispielsweise dadurch erreichen, dass sie auf dem Trittbrett 50 (Figur 5) stärker vor- und zurück wippt. In diesem Ausführungsbeispiel entspricht ein solches Verlaufsmuster einer Geschwindigkeits-Halte-Funktion. Somit kann die Person durch - gegebenenfalls zeitlich längeres bzw. wiederholtes - stärkeres Wippen auf dem Trittbrett 50 mit dem Fahrzeug 22 mit im wesentlichen konstanter Geschwindigkeit auch längere Strecken zurücklegen, ohne dass es einer manuellen Abstoßbewegung bedarf.

Im Falle der Figur 6c bewegt sich das Sensorsignal S24 abgesehen von einem Anfangsbereich durchgängig auf einem höheren Niveau als das Sensorsignal S26. Beide Sensorsignale S24, S26 unterliegen dabei jeweils geringen rhythmischen Schwankungen. Eine solche Situation - mit Ausnahme des Anfangsbereichs - entspricht in diesem Ausführungsbeispiel einem Verlaufsmuster, dem eine Beschleunigungsfunktion zugeordnet ist. Dieses Verlaufsmuster kann die Person beispielsweise dadurch erzielen, indem sie sich auf dem Trittbrett 50 nach vorne lehnt und/oder nach vorne beugt sowie eine leichte Wippbewegung vollzieht. Hiermit lässt sich in diesem Ausführungsbeispiel das Fahrzeug 22 beschleunigen. Dabei kann bei einer bevorzugten Ausführungsform vorgesehen sein, dass der zuletzt gespeicherte Referenzwert durch Auslösen der Beschleunigungsfunktion ebenfalls erhöht wird. Eine solche Ausgestaltung ermöglicht es, durch eine geeignete Körperbewegung und ohne Abstoßbewegung die mittels Motorantrieb 10 maximal erreichbare Geschwindigkeit des Fahrzeugs 22 zu erhöhen.

Im Falle der Figur 6d liegt dagegen der umgekehrte Fall vor, bei dem sich das Sensorsignal S26 durchgängig auf einem höheren Niveau als das Sensorsignal S24 bewegt. Im Unterschied zu dem Fall der Figur 6a, d. h. dem der Normalbetriebsfunktion entsprechenden Verlaufsmuster, ist der Signalabstand zwischen den beiden Sensorsignalen S24, S26 deutlich größer als im Fall der Figur 6a. Hierzu kann sich beispielsweise die Person, insbesondere weit, nach hinten lehnen und/oder ihre Fußspitzen anheben. Ein solches Verlaufsmuster entspricht in diesem Ausführungsbeispiel einer Bremsfunktion des Fahrzeugs 22, mittels derer das Fahrzeug 22 verlangsamt werden kann. Auch in diesem Fall kann das Verlaufsmuster geringe rhythmische Schwankungen vorsehen, sodass zur Auslösung der Bremsfunktion ebenfalls zumindest eine geringfügige Wippbewegung erforderlich ist.

Denkbar ist, dass alternative und/oder mehr Verlaufsmuster vordefiniert sind und somit alternative und/oder mehr Verlaufsmuster detektiert werden können. Beispielsweise ist es denkbar, Verlaufsmuster mit unterschiedlichen Änderungsfrequenzen und/oder Rhythmen vorzudefinieren. Auch sind Verlaufsmuster denkbar, die kombinierten Körperbewegungen entsprechen. Beispielsweise kann ein mehrmaliges, insbesondere zweimaliges, Wippen im Fußballenbereich 1002 mit einem mehrmaligen, insbesondere zweimaligen, Wippen im Fersenbereich 1004 kombiniert werden.

Bei den Ausführungsbeispielen gemäß der Figuren 5 und 6 ist es auch vorgesehen, die Leistung des Motorantriebs 12 zur Überwindung sich ändernder, äußerer Fahrwiderstände, beispielsweise aufgrund Steigungen, Gefällen und/oder Gegenwind, mittels Erfassung der Beschleunigungen des Fahrzeugs 22 und/oder durch Erfassen von Drehzahländerungen anzupassen. Die Anpassung kann dazu je nach Ausführungsform der Erfindung unabhängig von der gewählten Funktion oder nur bei Wahl bestimmter Funktionen erfolgen.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (100) zur Steuerung eines Motorantriebs (12) eines mittels einer manuellen Abstoßbewegung antreibbaren Fahrzeugs (22) zur Fortbewegung mindestens einer Person mit folgenden Schritten:
- Empfangen (120) eines ersten Sensorsignals und Speichern (120) des ersten Sensorsignals als Referenzwert, wobei das erste Sensorsignal den aktuellen Wert einer Geschwindigkeitskenngröße des Fahrzeugs (22) repräsentiert;
- Empfangen (130) mindestens eines zweiten Sensorsignals, wobei das zweite Sensorsignal eine von einer Person mittels einer Körperbewegung auf das Fahrzeug (22) ausgeübte Kraft (F1; F2) repräsentiert, wobei die Körperbewegung nicht als manuelle Abstoßbewegung ausgebildet ist; und
- Übertragen (140) eines Steuersignals (S3) an den Motorantrieb (12) in Abhängigkeit von dem zweiten Sensorsignal, sodass ein mittels des Motorantriebs (12) erzielter Wert der Geschwindigkeitskenngröße kleiner oder gleich dem zuletzt gespeicherten Referenzwert der Geschwindigkeitskenngröße ist, wobei das Steuersignal (S3) ausgebildet ist, den Motorantrieb (12) in einen Betriebszustand zu versetzen, in welchem der Motorantrieb (12) eine Antriebskraft auf das Fahrzeug (22) aufbringt.

2. Verfahren (100) nach Anspruch 1, **dadurch gekennzeichnet, dass** das Steuersignal (S3) ausgebildet ist, den Motorantrieb (12) in einen Betriebszustand zu versetzen, in welchem der Motorantrieb (12) mittels der Antriebskraft eine Verlangsamung des Fahrzeugs (22) reduziert.

3. Verfahren (100) nach Anspruch 1 oder 2, **dadurch gekennzeichnet, dass** der mittels der vom Motorantrieb (12) aufgebrachten Antriebskraft erzielte Wert der Geschwindigkeitskenngröße größer oder gleich einem virtuellen Leerlaufwert der Geschwindigkeitskenngröße ist, wobei der Leerlaufwert der Geschwindigkeitskenngröße dem aktuellen Wert der Geschwindigkeitskenngröße bei deaktiviertem Motorantrieb (12) entspricht.

4. Verfahren (100) nach Anspruch 3, **dadurch gekennzeichnet, dass** zur Ansteuerung des Motorantriebs (12) der aktuellen Wert der Geschwindigkeitskenngröße mit dem zuletzt gespeicherten Referenzwert der Geschwindigkeitskenngröße und/oder der aktuellen Wert der Geschwindigkeitskenngröße mit dem virtuellen Leerlaufwert der Geschwindigkeitskenngröße verglichen wird, sodass der mittels der vom Motorantrieb (12) aufgebrachten Antriebskraft erzielte Wert der Geschwindigkeitskenngröße im Intervall zwischen dem Leerlaufwert und dem zuletzt gespeicherten Referenzwert liegt.

5. Verfahren (100) nach einem der vorhergehenden Ansprüche, **dadurch gekennzeichnet, dass** das Steuersignal (S3) derart von dem zweiten Sensorsignal abhängt, dass der Motorantrieb (12) die Antriebskraft auf das Fahrzeug in Abhängigkeit von einer zeitlichen Länge der Körperbewegung und/oder einer Stärke der mittels der Körperbewegung auf das Fahrzeug ausgeübten Kraft (F1; F2) und/oder einer Höhe einer mittels der Körperbewegung ausgeübten Beschleunigung und/oder einer Änderung einer Geschwindigkeit und/oder einer Änderung einer Winkelgeschwindigkeit um eine Raumachse des Fahrzeugs aufbringt.

6. Verfahren (100) nach einem der vorhergehenden Ansprüche, **dadurch gekennzeichnet, dass** das zweite Sensorsignal eine von der Person mittels der Körperbewegung auf eine Trägerstruktur (38) und/oder ein Lenkelement (44) und/oder ein Kraftübertragungselement des Fahrzeugs (22) ausgeübte Kraft (F1; F2) repräsentiert.

7. Verfahren (100) nach einem der vorhergehenden Ansprüche, **dadurch gekennzeichnet, dass** die von der Person mittels der Körperbewegung auf das Fahrzeug (22) ausgeübte Kraft (F1; F2) ausgebildet ist, eine Beschleunigung des Fahrzeugs (22) und/oder eine pendelartige Rotationsbewegung mindestens eines Elements des Fahrzeugs (22) um mindestens eine Raumachse zu bewirken und das zweite Sensorsignal die Beschleunigung und/oder die pendelartige Rotationsbewegung repräsentiert.

8. Verfahren nach einem der vorhergehenden Ansprüche, dadurch gekenzeichnet, dass ein Auftreten wenigstens eines vordefinierten Verlaufsmusters im zweiten Sensorsignal detektiert wird und das Übertragen (140) des Steuersignals (S3) an den Motorantrieb (12) in Abhängigkeit des detektierten Verlaufsmusters erfolgt.

9. Steuergerät (10), das eingerichtet ist, um das Verfahren (100) gemäß einem der Ansprüche 1 bis 8 auszuführen.

10. Computerprogramm, das dazu eingerichtet ist, das Verfahren (100) gemäß einem der Ansprüche 1 bis 8 auszuführen.

11. Maschinenlesbares Speichermedium, auf dem das Computerprogramm nach Anspruch 10 gespeichert ist.

12. Fahrzeug (22) mit einem Steuergerät (10) nach Anspruch 9, einem Motorantrieb (12), und mindestens einem Sensorelement (14; 16; 24; 26; 28; 30; 32; 34; 36).

13. Fahrzeug (22) nach Anspruch 12, **dadurch gekennzeichnet, dass** das Fahrzeug (22) als elektrisch unterstützter Tretroller (22), als elektrisch unterstütztes Fahrrad oder als elektrisch unterstützter Rollstuhl ausgebildet ist.

14. Fahrzeug (22) nach Anspruch 12 oder 13, **dadurch gekennzeichnet, dass** das Fahrzeug (22) eine Trägerstruktur (38) und/oder ein Lenkelement (44) aufweist und mindestens ein Kraftsensor (24; 26; 28; 30) an der Trägerstruktur (38) und/oder dem Lenkelement (44) angeordnet ist.

15. Tretroller (22) mit einem Steuergerät (10) nach Anspruch 9, **dadurch gekennzeichnet, dass** der Tretroller (22) mindestens einen Drehratensensor (34), mindestens einen Beschleunigungssensor (32), mindestens einen Geschwindigkeitssensor (36) und mindestens einen Kraftsensor (24; 26; 28; 30) aufweist, wobei der Kraftsensor (24; 26; 28; 30) an einem Trittbrett (50) des Tretrollers (22) angeordnet ist.
